# EUROPEAN PATENT APPLICATION

(11) **EP 4 604 198 A1**
(43) Date of publication of application: **20.08.2025**
(21) Application number: 23891377.6
(22) Date of filing: 02.11.2023
(51) Int. Cl.: H01M 4/134, H01M 4/38, H01M 4/62, H01M 4/66, H01M 10/052, H01M 10/0562

(54) **MATERIAL FOR FORMING ALL-SOLID-STATE LITHIUM ION SECONDARY BATTERY NEGATIVE ELECTRODE, AND ALL-SOLID-STATE LITHIUM ION SECONDARY BATTERY**

(30) Priority: 18.11.2022 JP 2022185101
(71) Applicant: TOKUYAMA CORPORATION, Yamaguchi 745-8648 (JP)
(72) Inventor: ISHIDA Haruyuki, Shunan-shi, Yamaguchi 745-8648 (JP)
(74) Representative: Canzler & Bergmeier Patentanwälte Partnerschaft mbB
(86) International application number: PCT/JP2023/039658
(87) International publication number: WO 2024/106224

(57) **Abstract**

The present invention addresses the problem of controlling, as uniformly as possible, the size of amorphous silicon blocks that are spontaneously and non-uniformly generated when LiB is charged and discharged using silicon as a negative electrode active material. The present invention relates to a material for forming an all-solid-state lithium ion secondary battery negative electrode having, on a negative electrode current collector, a negative electrode active material layer in which: island-shaped convex parts made of a composition for forming an all-solid-state lithium ion secondary battery negative electrode containing silicon crystals having an average particle diameter of 0.5-5.0 µm are formed in a pattern at intervals; and a connection layer made of the composition for forming an all-solid-state lithium ion secondary battery negative electrode is formed to be continuous with the island-shaped convex parts, on the bottom surface of groove sections formed between the island-shaped convex parts. With regard to a negative electrode obtained by using said negative electrode forming material, dense and uniformly shaped blocks are formed by fusing the active materials after charging and discharging.

## Description

### Technical Field

The present invention relates to a negative electrode forming material for an all-solid-state lithium ion secondary battery. The present invention also relates to an all-solid-state lithium ion secondary battery using a negative electrode obtained from the forming material.

### Background Art

A lithium ion secondary battery (hereinafter, may be abbreviated as "LiB") has a high energy density among secondary batteries, and is thus widely used. As the lithium ion secondary battery, well known is a non-aqueous electrolytic solution-based LiB in which a positive electrode containing an active material such as lithium cobalt oxide (LiCoO₂) or lithium iron phosphate (LiFePO₄) and a negative electrode containing an active material capable of occluding and releasing a lithium ion are disposed via a separator, and a non-aqueous electrolytic solution obtained by dissolving an electrolyte made of a lithium salt such as LiBF₄ in an organic solvent such as ethylene carbonate is used as an electrolytic solution. Charge and discharge of the non-aqueous electrolytic solution-based LiB are performed by moving a lithium ion in the secondary battery between the positive electrode and the negative electrode via the non-aqueous electrolytic solution, and inserting and desorbing the lithium ion being into and from active materials of the positive electrode and the negative electrode. However, such a non-aqueous electrolytic solution-based LiB has a risk of leakage of the electrolytic solution, and there is a demand for improvement in terms of safety.

With expansion of an application of a battery, attention has been paid to a large battery such as an automobile battery and a stationary battery. In the large battery, it is more important to ensure the safety than in a small battery, and there has been proposed an all-solid-state lithium ion secondary battery (all-solid-state LiB) having safety and high reliability in which the above electrolytic solution is replaced with an inorganic solid electrolyte to easily ensure the safety even when the size is increased as compared with a LiB using the electrolytic solution.

As a negative electrode active material of the LiB, carbon has been used in the related art. From a viewpoint of increasing a capacity, use of silicon as the negative electrode active material has been studied. Silicon, as the negative electrode active material, has a theoretical capacity density of 4200 mAh/g (volume capacity density: 2370 mAh/cm³), which is about 11 times higher in capacity/weight ratio and about 3 times higher in capacity/volume ratio than those of carbon, and is expected to dramatically increase the capacity of the secondary battery.

However, since silicon has a very large volume change of about 400% due to charge and discharge, deterioration such as pulverization and isolation of silicon occurs in the process of repeating charge and discharge. As a result, a charge and discharge efficiency and a cycle life characteristic are poor, and it is difficult to put the LiB using silicon as the negative electrode active material into practical use particularly in a large battery for an electric vehicle which is intended to be used for a long period of time.

In particular, in a lithium ion battery in the related art using a liquid-based ion conductor such as an electrolyte solution or an ionic liquid, when silicon is used as a negative electrode active material, the following problems are present.
(1) An electrode structure collapses due to expansion and contraction of silicon during charge and discharge, and battery performance deteriorates.
(2) The deterioration of the battery performance is caused because silicon particles are pulverized due to expansion and contraction, and a decomposition product of the liquid-based ion conductor adheres to surfaces of the fine particles, so that ion conductivity at an interface between a negative electrode active material and the ion conductor decreases and an electron conductive path is disconnected.
(3) In order to maintain electron conductivity even when the silicon particles are pulverized, it is necessary to add a large amount of an electron conductivity imparting agent such as carbon. However, since carbon also acts as the negative electrode active material, disadvantages such as competition between carbon and silicon, an increase in irreversible capacity due to carbon, and localization of lithium occur.
(4) Since the decomposition product of the liquid-based ion conductor adheres to the interface between silicon serving as the negative electrode active material and the ion conductor, electrical resistance at this interface increases, a current density during charge and discharge cannot be increased, and it is difficult to improve the battery performance. Further, since an electrochemical capacity is consumed for the formation of the decomposition product, the irreversible capacity increases, and the electrochemical capacity as the negative electrode active material decreases.
(5) When such a phenomenon occurs, the silicon fine particles are isolated or detached from a negative electrode current collector, and cannot be involved in the next charge and discharge. When charge and discharge are further performed in this state, the amount of lithium inserted into the silicon particles maintaining being in contact with the negative electrode current collector increases. Therefore, a change in expansion and contraction of the silicon particles is larger, and further pulverization progresses. By repeating the above process, the amount of the silicon particles involved in charge and discharge decreases, and a charge and discharge capacity rapidly decreases. That is, a cycle characteristic deteriorates due to electrode collapse.

On the other hand, problems of a silicon negative electrode material in an all-solid-state battery using a solid electrolyte are considered as follows.
(1) During charge, that is, when an insertion reaction of lithium into silicon occurs, the active material expands. At this time, since there is no mechanism for alleviating the volume change in an electrode layer densely filled with the solid electrolyte and the active material, a stress is generated in a solid electrolyte layer formed on the electrode layer and further in a positive electrode layer which is a counter electrode, and accordingly the solid electrolyte layer is broken, a short circuit occurs between the negative electrode layer and the positive electrode layer, and a function as a battery is impaired.
(2) Further, during discharge, that is, when an extraction reaction of lithium from the negative electrode active material occurs, volume contraction of the active material occurs. At this time, since there is a phenomenon that a distance between a surface of the active material and the solid electrolyte increases, an ion conductive path to the active material is disconnected. Further, contact between the active material and the negative electrode current collector or a carbon-based material added as the electron conductivity imparting agent to the electrode layer is also dissociated due to the contraction of the active material. Therefore, the electron conductive path is also disconnected. The above matter causes the silicon particles to be separated from an electrochemical reaction system, resulting in isolation and rapid deterioration of the electrochemical capacity. Even when there is no problem in expansion during charge, battery performance deterioration occurs due to the contraction of the active material during discharge.

Therefore, it is difficult to put the lithium ion secondary battery using silicon as a negative electrode active material into practical use while a high capacity density is expected. There are various technical proposals from a viewpoint of preventing the electrode collapse due to the expansion and contraction of silicon during charge and discharge. Patent Literature 1 (Japanese Patent Laid-Open No. 2003-109590) discloses a negative electrode material in which silicon is doped with phosphorus, boron, or aluminum to reduce a volume change. Patent Literature 2 (Japanese Patent Laid-Open No. 2005-11699) proposes a battery structure in which a density of a negative electrode and a size of a gap in a battery are controlled to absorb a volume change of the negative electrode and to reduce an influence of the volume change. However, the secondary batteries described in these Patent Literatures use a non-aqueous electrolytic solution, and are not preferred from the viewpoint of safety as described above.

In addition, Patent Literature 3 (Japanese Patent Laid-Open No. 2021-68706) exemplified silicon as one example of negative electrode materials for an all-solid-state LiB, but there is no working embodiment, and thus there is no description of problems of pulverization and isolation of silicon due to repeated charge and discharge, and there is no suggestion of a solution thereto. In addition, although it is described as an all-solid-state battery, an ionic liquid is used, which is not an all-solid-state battery in a strict sense, and a risk of liquid leakage cannot be eliminated.

A decrease in capacity due to the pulverization of silicon is a problem in both the non-aqueous electrolytic solution-based LiB and the all-solid-state LiB, but causes thereof are different. In addition, the decrease in capacity in the all-solid-state LiB is mainly caused by contact failure between silicon as an electrode active material and the solid electrolyte, the electron conductivity imparting agent, or the negative electrode current collector. Therefore, there is a step of applying a relatively large molding pressure in an all-solid-state battery production process. Further, even when the battery is in operation, a pressure referred to as a restraining pressure may be applied to maintain contact energization. Accordingly, in the all-solid-state LiB, the decrease in capacity due to the pulverization of silicon is less likely to occur than in the non-aqueous electrolytic solution-based LiB.

In the all-solid-state LiB, a negative electrode active material layer is generally formed by mixing fine carbon particles such as acetylene black or metal fine particles as the electron conductivity imparting agent for imparting the electron conductivity, and/or a solid electrolyte as an ion conductivity imparting agent. When charge and discharge are performed under the restraining pressure, the solid electrolyte is fitted into voids between silicon particles or cracks of the particles during the expansion and contraction of silicon, and silicon is gradually pulverized to reduce the capacity. In addition, by adding a large amount of the electron conductivity imparting agent and the ion conductivity imparting agent, a relative volume of silicon in the negative electrode decreases, which is not preferred from a viewpoint of improving the capacity.

Non-Patent Literature 1 proposes an all-solid-state LiB using silicon crystal particles having an average particle diameter of 0.8 µm to 3.9 µm as a negative electrode active material. It is estimated that by using a silicon crystal having a specific particle diameter, appropriate voids are formed in a negative electrode active material layer, and a stress during a volume change due to expansion and contraction of the negative electrode active material is relaxed by the voids, and the negative electrode active material is not pulverized, and isolation is also prevented.

### Citation List

### Patent Literature

Patent Literature 1: Japanese Patent Laid-Open No. 2003-109590
Patent Literature 2: Japanese Patent Laid-Open No. 2005-11699
Patent Literature 3: Japanese Patent Laid-Open No. 2021-68706

### Non-Patent Literature

Non-Patent Literature 1: Nobuya Machida et al. (2022) "Preparation of coated silicon electrode and application thereof to negative electrode for all-solid-state battery" "Proceedings of Autumn Meeting of the Japan Society of Powder and Powder Metallurgy, 2022', 2-60A

### Summary of Invention

### Technical Problem

As described above, from the viewpoint of improving the safety and increasing the capacity, there is a high demand for realizing an all-solid-state LiB using silicon as the negative electrode active material, but many technical problems remain in the proposed techniques in the related art. That is, an object of the present invention is to provide an all-solid-state lithium ion secondary battery in which a negative electrode active material (silicon) is not pulverized or isolated and a cycle characteristic is better.

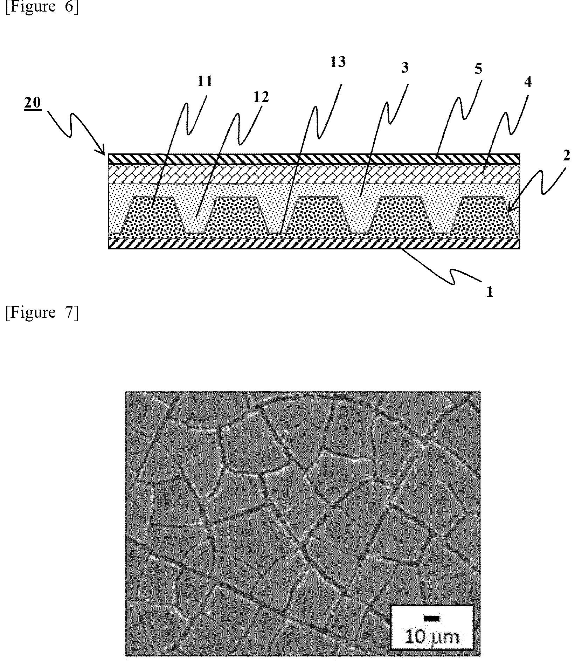

In order to solve such a problem, the present inventor has focused on the technique described in Non-Patent Literature 1, has produced an all-solid-state LiB using silicon crystal particles having an average particle diameter of 0.8 µm to 1.6 µm as a negative electrode active material, and has tried to evaluate characteristics thereof. As a result, since improvement of the cycle characteristic has been recognized, further study has been performed to carefully examine a structure of a negative electrode active material layer. When a battery having a negative electrode active material layer using the above silicon crystal particles having a specific particle diameter is assembled and performs charge and discharge, it has been found that some or all of the silicon crystal particles are amorphized, and as shown in an SEM image in Figure 7, the silicon crystal particles are divided in a block shape and densified in each block. The block-shaped negative electrode active material layer is dense and adheres to a negative electrode current collector, and thus exhibits excellent electron conductivity. It is considered that gaps are generated between the blocks, a stress during a volume change due to expansion and contraction of each block is relaxed by the gaps, and pulverization and isolation of silicon as the negative electrode active material are prevented.

However, sizes of the blocks spontaneously generated during charge and discharge and the gaps between the blocks are non-uniform. Therefore, the volume change due to the expansion and contraction of the blocks having non-uniform sizes may not be completely relaxed by the gaps having non-uniform widths. That is, when large blocks are adjacent to each other with a narrow gap, the blocks may come into contact with each other and collapse during charge and discharge, which may cause pulverization and isolation.

In addition, since many groove portions formed between the blocks reach the negative electrode current collector, the solid electrolyte enters an interface between the blocks and the negative electrode current collector, and a gap is generated, which may promote the isolation of silicon.

In this way, in this technique, there is a concern that variations in performance such as discharge performance and durability occur between the obtained all-solid-state LiB, which may cause a problem in industrial implementation.

Therefore, the present inventor has considered that the problem can be solved by controlling, as uniformly as possible, sizes of amorphous silicon blocks that are spontaneously and non-uniformly generated when an all-solid-state LiB is charged and discharged using silicon as a negative electrode active material, and by making it difficult for the gap to be generated between the block and the negative electrode current collector in the groove portion formed between the blocks, and has thus completed the present invention.

### Solution to Problem

In order to solve such a problem, the present invention includes the following gist.
(1) A negative electrode forming material for an all-solid-state lithium ion secondary battery, the material including:
   on a negative electrode current collector, a negative electrode active material layer, which is made of a negative electrode forming composition for an all-solid-state lithium ion secondary battery containing a silicon crystal having an average particle diameter of 0.5 µm to 5.0 µm, which includes island-shaped convex portions formed in a pattern shape at an interval, and in which a connection layer made of the negative electrode forming composition for an all-solid-state lithium ion secondary battery is formed continuously with the island-shaped convex portions on a bottom surface of a groove portion formed between the island-shaped convex portions.
(2) The negative electrode forming material for an all-solid-state lithium ion secondary battery according to (1), in which
   the negative electrode active material layer is formed on the negative electrode current collector in a pattern such that a width of each of the island-shaped convex portions is in a range of 10 µm to 100 µm, a height thereof is in a range of 5 µm to 100 µm, the interval between the island-shaped convex portions is in a range of 10% to 50% of the width of the island-shaped convex portion, and a thickness of the connection layer is in a range of 1% to 50% of the height of the island-shaped convex portion and does not exceed 15 µm.
(3) The negative electrode forming material for an all-solid-state lithium ion secondary battery according to (1), in which
   the negative electrode active material layer is formed on the negative electrode current collector in a pattern such that a shape of each of the island-shaped convex portions is a cylindrical shape, an elliptical cylindrical shape, a polygonal cylindrical shape, a truncated cone shape, an elliptical truncated cone shape, a polygonal truncated cone shape, a cone shape, an elliptical cone shape, or a polygonal pyramid shape.
(4) The negative electrode forming material for an all-solid-state lithium ion secondary battery according to (1), in which
   a silicon crystal filling ratio is 35 vol% to 55 vol%.
(5) The negative electrode forming material for an all-solid-state lithium ion secondary battery according to (1), in which
   the negative electrode active material layer contains 5 parts by mass or less of an electron conductivity imparting agent with respect to 100 parts by mass of the silicon crystal.
(6) An all-solid-state lithium ion secondary battery including:
   a positive electrode;
   a negative electrode; and
   a solid electrolyte layer, in which
   the negative electrode is composed of the negative electrode forming material for an all-solid-state lithium ion secondary battery according to any one of (1) to (5).
(7) The all-solid-state lithium ion secondary battery according to (6), in which the solid electrolyte layer is also present in the groove portion.

### Advantageous Effects of Invention

In the present invention, in preparing an all-solid-state LiB, a negative electrode active material layer is formed on a negative electrode current collector, which is made of a negative electrode forming composition containing a negative electrode active material containing a silicon crystal having an average particle diameter of 0.5 µm to 5.0 µm, which includes island-shaped convex portions formed in a pattern shape, and in which a layer made of the negative electrode forming composition for an all-solid-state lithium ion secondary battery (hereinafter, referred to as a "connection layer") is formed continuously with the island-shaped convex portions on a bottom surface of a groove portion formed between the island-shaped convex portions, and a negative electrode forming material for an all-solid-state LiB, which is a precursor of a negative electrode of the all-solid-state LiB, is obtained. When an all-solid-state lithium ion secondary battery is assembled using the negative electrode forming material for an all-solid-state LiB and is charged and discharged, some or all of silicon crystal particles as the negative electrode active material are amorphized and densified. At the same time, the negative electrode active material is fused to form a block-shaped mass while substantially maintaining a shape and a size of the island-shaped convex portion. The block-shaped mass has a small volume change rate during charge and discharge of the all-solid-state LiB, and has a good cycle characteristic. In addition, since the block is in close contact with the negative electrode current collector and a solid electrolyte, high electron conductivity and ion conductivity can be achieved without using an electron conductivity imparting agent or an ion conductivity imparting agent, and a current density during charge and discharge can be increased. In addition, since the formation of a large crack is prevented in the above dense block, a phenomenon that the solid electrolyte penetrates the silicon block during charge and discharge is less likely to occur, and a decrease in capacity due to pulverization and isolation of silicon can be avoided. Further, by forming the negative electrode active material layer in a pattern shape in advance, sizes of amorphous silicon blocks formed after charge and discharge can be made uniform, and an interval between the blocks can also be made uniform. A solid electrolyte can be present in a groove (gap) between the blocks, and has a function of absorbing volume expansion during charge and discharge, and collapse of the negative electrode due to a volume change, which is a problem caused by repeated use, is less likely to occur. In addition, by forming the connection layer on the bottom surface of the groove portion formed between the island-shaped convex portions, a phenomenon that the solid electrolyte penetrates an interface between silicon and the negative electrode current collector can be effectively prevented and isolation of silicon can be prevented, thereby further improving the cycle characteristic of the all-solid-state LiB.

As a result, an all-solid-state lithium ion secondary battery having a good cycle characteristic and further having a high current density during charge and discharge can be obtained in a state in which variations in performance among products are extremely small.

### Brief Description of Drawings

[Figure 1] Figure 1 is a schematic cross-sectional view illustrating an embodiment of a negative electrode forming material for an all-solid-state LiB according to the present invention.
[Figure 2] Figure 2 is a schematic plan view illustrating an embodiment of the negative electrode forming material for an all-solid-state LiB according to the present invention.
[Figure 3] Figure 3 is a plan view illustrating another embodiment of the negative electrode forming material for an all-solid-state LiB according to the present invention.
[Figure 4] Figure 4 is a plan view illustrating another embodiment of the negative electrode forming material for an all-solid-state LiB according to the present invention.
[Figure 5] Figure 5 is a plan view illustrating another embodiment of the negative electrode forming material for an all-solid-state LiB according to the present invention.
[Figure 6] Figure 6 is a schematic cross-sectional view illustrating an embodiment of a state of an all-solid-state LiB according to the present invention before charge and discharge.
[Figure 7] Figure 7 is an SEM image illustrating a state in which an active material layer is formed into a block after charge and discharge of the all-solid-state LiB in which a negative electrode active material layer of the all-solid-state LiB is formed on an entire surface of a negative electrode current collector.

### Description of Embodiments

Hereinafter, an embodiment of the present invention will be described. First, negative electrode active material particles for an all-solid-state lithium ion secondary battery will be described, and then, a negative electrode forming composition for an all-solid-state lithium ion secondary battery containing the particles, a negative electrode forming material for an all-solid-state lithium ion secondary battery obtained using the composition, and an all-solid-state lithium ion secondary battery including a negative electrode for an all-solid-state lithium ion secondary battery will be described.

In the present description, the all-solid-state battery refers to a battery that does not contain a liquid substance such as a non-aqueous electrolytic solution or an ionic liquid as an electrolyte.

The negative electrode forming material for an all-solid-state lithium ion secondary battery is a laminate immediately after the negative electrode forming composition for an all-solid-state lithium ion secondary battery is applied onto a negative electrode current collector and dried, and contains a negative electrode active material before charge and discharge. When charge and discharge are performed, silicon crystal particles as the negative electrode active material are amorphized, and are fused into a block shape and densified.

### (Negative Electrode Active Material Particles for All-solid-state Lithium Ion Secondary Battery)

The negative electrode active material particles for an all-solid-state LiB used in the present invention are made of a silicon crystal having an average particle diameter of 0.5 µm to 5.0 µm. When a battery is assembled using the negative electrode active material and is charged and discharged, a part or all of the silicon crystal particles are amorphized, fused, and densified, and thus a negative electrode having a small decrease in capacity due to pulverization and isolation of silicon is obtained, and a cycle characteristic is improved.

The silicon crystal means both a polycrystal and a single crystal. Therefore, the negative electrode active material particles according to the present invention may be polycrystalline silicon particles, single crystal silicon particles, or a mixture thereof. The polycrystalline silicon particles may be obtained by crushing and classifying a polycrystalline silicon rod obtained by a so-called Siemens method. The single crystal silicon particles may be obtained by crushing and classifying single crystal silicon obtained by a so-called Czochralski method. The single crystal silicon particles may be obtained by crushing and classifying metal silicon obtained by a reduction method of silica stone. The silicon crystal shows a clear peak by X-ray diffraction.

An average particle diameter of the silicon crystal particles is preferably 0.8 µm to 2.5 µm, and more preferably 1.0 µm to 1.6 µm, from a viewpoint of promoting formation of blocks and densification of a negative electrode active material layer. The average particle diameter means a 50% cumulative diameter (D50) in a particle size distribution measurement result by a laser scattering method.

The silicon crystal particles more preferably have the following characteristics together with the average particle diameter from the viewpoint of promoting the formation of blocks and the densification of the negative electrode active material layer.

A ratio (standard deviation/average value) of an arithmetic standard deviation to an arithmetic average value of the particle diameters is preferably more than 0.53, more preferably more than 0.55, and particularly preferably more than 0.57.

A specific surface area of the particles is in a range of 3 m²/g to 50 m²/g, and more preferably in a range of 10 m²/g to 25 m²/g. The specific surface area is determined by gas adsorption measurement by a constant volume method.

A shape of the particles is indeterminate when obtained by crushing, but other shapes such as a spherical shape are also adopted without particular limitation.

In order to improve adhesion between the silicon particles and a binder component to be described later, the silicon particles may be subjected to a surface treatment.

A purity of the silicon crystal is not particularly limited, and in the present invention, the purity of the silicon crystal is preferably 90 mass% or more. Specifically, silicon having an oxygen concentration of less than 5.0 mass%, a nitrogen concentration of less than 1.0 mass%, and a halogen element concentration of less than 0.1 mass% is preferably used. It is preferable to control the concentrations of oxygen, nitrogen, and the halogen element within the above ranges since oxygen, nitrogen, and the halogen element react with Li, an irreversible capacity is undesirably generated, and a characteristic of a battery deteriorates.

As the silicon crystal, silicon having a surface carbon concentration of 0.5 mass% to 5.0 mass% and an oxygen concentration of 0.5 mass% to 5.0 mass% may be used. High purity silicon has low conductivity, and in many cases, an electron conductivity imparting agent such as carbon is used in combination. However, as described above, the relative amount of the negative electrode active material relatively decreases by blending the electron conductivity imparting agent, which is not preferred. Therefore, it has been found that by adhering carbon and oxygen as impurities to a surface of high purity silicon, a polarity of the surface of the particles is improved, and an electron can easily move to the vicinity of the particles, and thus the electron conductivity imparting agent can be eliminated.

Such surface carbon and surface oxygen are often derived from a binder or a dispersion medium, but are not limited thereto.

Similar to carbon, a metal impurity acting as an electron conductivity imparting agent may adhere to the surface of silicon. Examples of such a metal include aluminum and zirconium, and a surface aluminum concentration is preferably 0.1 mass% to 1.0 mass%, and a surface zirconium concentration is preferably 0.1 mass% to 1.0 mass%. Aluminum and zirconium are often derived from alumina and zirconia used at the time of crushing silicon, but are not limited thereto.

Further, considering a possibility that chemical stability with respect to a sulfide-based solid electrolyte is improved or a possibility that diffusibility of lithium is improved, doped silicon can be used in the present invention. As a doping agent, an element whose single crystal has an atomic radius larger than that of silicon is preferably used. Examples of such an element include **P,** Ge, Sn, and Sb. When such an element is doped and alloyed with silicon, a distance between atoms is larger than that of pure silicon, and it can be expected that Li is smoothly inserted and desorbed.

### (Negative Electrode Forming Composition for All-solid-state Lithium Ion Secondary Battery)

The above negative electrode active material is mixed with a component constituting the negative electrode to prepare a negative electrode forming composition, and a negative electrode active material layer is formed on a negative electrode current collector to obtain a negative electrode. When a battery is assembled using the above negative electrode active material and is charged and discharged, a part or all of the silicon crystal particles are amorphized, fused in a block shape, and densified in each block. The block-shaped negative electrode active material layer is dense and adheres to the negative electrode current collector, and thus exhibits excellent electron conductivity. Therefore, when the negative electrode active material particles according to the present invention are used, the amount of the electron conductivity imparting agent used can be reduced, or the electron conductivity imparting agent can be omitted in some cases.

That is, the negative electrode forming composition for an all-solid-state LiB contains the above negative electrode active material particles, and a content of the electron conductivity imparting agent is preferably 5 parts by mass or less with respect to 100 parts by mass of the negative electrode active material particles. According to the present invention, since a ratio of the electron conductivity imparting agent is reduced, a relative amount of the active material particles can be increased, which can contribute to increasing the capacity. The content of the electron conductivity imparting agent in the negative electrode forming composition for an all-solid-state LiB is preferably 3 mass% or less, more preferably 1 mass% or less, and still more preferably substantially zero.

The negative electrode forming composition for an all-solid-state LiB may contain an ion conductivity imparting agent in order to improve ion conductivity. As such an ion conductivity imparting agent, a solid electrolyte to be described later can be used. When a blending amount of the ion conductivity imparting agent is too large, the relative amount of the active material particles decreases, and the cycle characteristic also decreases. Therefore, the content of the ion conductivity imparting agent in the negative electrode forming composition for an all-solid-state LiB is preferably 30 mass% or less, more preferably 20 mass% or less, and still more preferably substantially zero.

The negative electrode forming composition for an all-solid-state LiB may contain a binder, a plasticizer, and the like. A total amount of these components is preferably 20 parts by mass or less, and more preferably 15 parts by mass or less with respect to 100 parts by mass of the negative electrode active material particles. When the blending amount of the binder or the plasticizer is too large, the amount of the active material in the negative electrode active material layer relatively decreases, which is not preferred for increasing the battery capacity.

Examples of the binder include: a thermosetting resin such as a thermosetting polyimide, a phenol resin, an epoxy resin, a urea resin, a melamine resin, an unsaturated polyester resin, and a polyurethane; a cellulose derivative such as carboxymethyl cellulose, hydroxypropyl methyl cellulose, hydroxypropyl cellulose, ethyl cellulose, hydroxyethyl cellulose, and hydroxymethyl cellulose or a watersoluble polymer such as polyvinyl alcohol; a polycarbonate-based resin such as polypropylene carbonate; polyvinylidene fluoride; and a styrene-butadiene copolymer (so-called SBR rubber-based), a styrene-propylene copolymer, and a styrene-ethylene-propylene copolymer (so-called SES-based and SEPS-based).

The negative electrode forming composition for an all-solid-state LiB can contain a dispersion medium for forming a coating material in the case of forming island-shaped convex portions made of the negative electrode forming composition for an all-solid-state LiB to be described later on the negative electrode current collector. The dispersion medium is appropriately selected from alcohols, aldehydes, ketones, ethers, esters, amides, imides, aliphatic hydrocarbons, alicyclic hydrocarbons, aromatic hydrocarbons, heterocycles, and the like, and examples thereof include methanol, ethanol, normal propyl alcohol, isopropyl alcohol, normal butyl alcohol, isobutyl alcohol, pentyl alcohol, hexyl alcohol, heptyl alcohol, octyl alcohol, 2-ethylhexyl alcohol, benzyl alcohol, ethylene glycol monomethyl ether, diethylene glycol monomethyl ether, triethylene glycol monomethyl ether, ethylene glycol monoisopropyl ether, diethylene glycol monoisopropyl ether, triethylene glycol monoisopropyl ether, ethylene glycol monobutyl ether, diethylene glycol butyl ether, triethylene glycol monobutyl ether, propylene glycol monomethyl ether, dipropylene glycol monomethyl ether, ethyl acetate, normal propyl acetate, isopropyl acetate, normal butyl acetate, isobutyl acetate, hexyl acetate, ethylene glycol monomethyl ether acetate, diethylene glycol monomethyl ether acetate, triethylene glycol monomethyl ether acetate, ethylene glycol monoisopropyl ether acetate, diethylene glycol monoisopropyl ether acetate, triethylene glycol monoisopropyl ether acetate, ethylene glycol monobutyl ether acetate, diethylene glycol monobutyl ether acetate, triethylene glycol monobutyl ether acetate, propylene glycol monomethyl ether acetate, dipropylene glycol monomethyl ether acetate, hexane, nonane, decane, isodecane, dodecane, isododecane, terpene, a naphthene-based solvent, an isoparaffin-based solvent, cyclohexane, methyl cyclohexane, dimethyl cyclohexane, ethyl cyclohexane, alkyl cyclohexane, toluene, xylene, an aromatic high-boiling-point solvent, acetone, methyl ethyl ketone, methyl pentyl ketone, methyl isobutyl ketone, cyclohexanone, terpineol, dihydroterpineol, dihydroterpineol acetate, NMP (N-methylpyrrolidone), methoxybenzene, diethyl ether, dipropyl ether, and dibutyl ether. These dispersion mediums may be used alone or in combination. The amount of the dispersion medium used may be appropriately determined such that a viscosity of a paste containing the negative electrode forming composition for an all-solid-state LiB is an optimum viscosity in a method for forming the negative electrode active material layer. Such a dispersion medium is removed by drying after applying the paste containing the negative electrode forming composition for an all-solid-state LiB.

### (Negative Electrode Forming Material for All-solid-state Lithium Ion Secondary Battery)

By forming a negative electrode active material layer made of the above negative electrode forming composition for an all-solid-state LiB on a negative electrode current collector, a negative electrode forming material for an all-solid-state LiB is obtained. The negative electrode forming material is one of components constituting a battery, and functions as a negative electrode. When a LiB is assembled and is charged and discharged, the silicon crystal is amorphized, and thus a crystal structure is different from that of the negative electrode in the battery after charge and discharge.

A filling ratio of silicon as an active material in the above negative electrode active material layer is preferably in a range of 35 vol% to 55 vol%, and more preferably in a range of 40 vol% to 50 vol%. Since the filling ratio of an active material is low and voids are present in the negative electrode active material layer, lithium ions are occluded in the silicon active material along with the charge and discharge, and volume expansion can be relaxed when amorphization (lithium-silicon alloying) is performed. The above active material filling ratio can be adjusted based on the particle diameter or a particle size distribution of the silicon particles, an adding amount of the binder, or the like. The active material filling ratio in the negative electrode active material layer means a ratio of a volume of silicon to a volume of the negative electrode.

As the negative electrode current collector, a copper foil, a nickel foil, or a SUS foil is generally used, and other conductive metal foils may be used. The negative electrode current collector may be electrolytic copper having a surface on which rustproofing is performed. A thickness of the negative electrode current collector is not particularly limited, and from a viewpoint of miniaturization of the battery, handleability, and the like, the thickness is generally 3 µm to 100 µm, and in the case of performing a roll-to-roll production method, a negative electrode current collector having a thickness of 5 µm to 50 µm is preferably used. A shape of the negative electrode current collector may be a sheet shape without holes, or may be a sheet shape with holes, such as a two-dimensional mesh, a three-dimensional mesh, or a perforated metal. A surface of the negative electrode current collector may be subjected to a known surface treatment, for example, treatments such as mechanical surface processing, etching, a chemical conversion treatment, anodization, wash primer, corona discharge, and glow discharge.

When the negative electrode active material layer containing the silicon crystal is charged and discharged, the silicon crystal particles as the negative electrode active material are amorphized, and are fused into a block shape and densified. However, since formation of blocks of the negative electrode active material layer occurs spontaneously during charge and discharge, sizes and shapes of blocks and gaps between the blocks are likely to be non-uniform. When the sizes and the shapes of the blocks and the gaps between the blocks are non-uniform, adjacent blocks come into contact with each other due to expansion and contraction during charge and discharge, and a force of compressing the blocks is generated, cracking the blocks. As a result, pulverization and isolation of the negative electrode active material occur, which may cause a decrease in capacity. In addition, many groove portions formed between the blocks reach the negative electrode current collector, and a gap is generated since the solid electrolyte penetrates an interface between the block and the negative electrode current collector, which causes peeling of the blocks and promotes the isolation of silicon.

As a result of intensive studies on means for controlling sizes, shapes, and intervals of blocks that are spontaneously generated, the present inventors have considered that a negative electrode active material layer made of the negative electrode forming material for an all-solid-state LiB before charge and discharge is formed in advance into a shape of island-shaped convex portions in a pattern shape at an interval, and a connection layer covering a bottom portion of a groove formed between the island-shaped convex portions is formed.

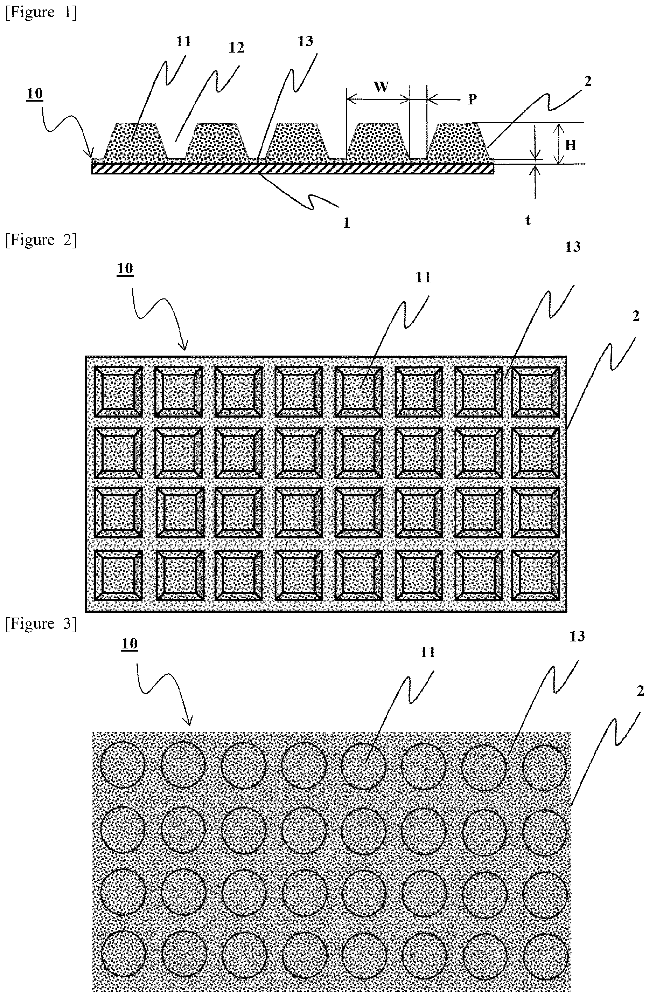

That is, as illustrated in a cross-sectional view in Figure 1 and a plan view in Figure 2, a negative electrode forming material for an all-solid-state LiB 10 according to the present embodiment includes a negative electrode active material layer 2 made of the negative electrode forming composition for an all-solid-state LiB on a negative electrode current collector 1, and the negative electrode active material layer 2 has a structure in which island-shaped convex portions 11 are formed in a pattern shape at an interval, and a connection layer 13 made of the negative electrode forming composition for an all-solid-state lithium ion secondary battery is formed continuously with the island-shaped convex portions on a bottom surface of a groove portion 12 formed between the island-shaped convex portions.

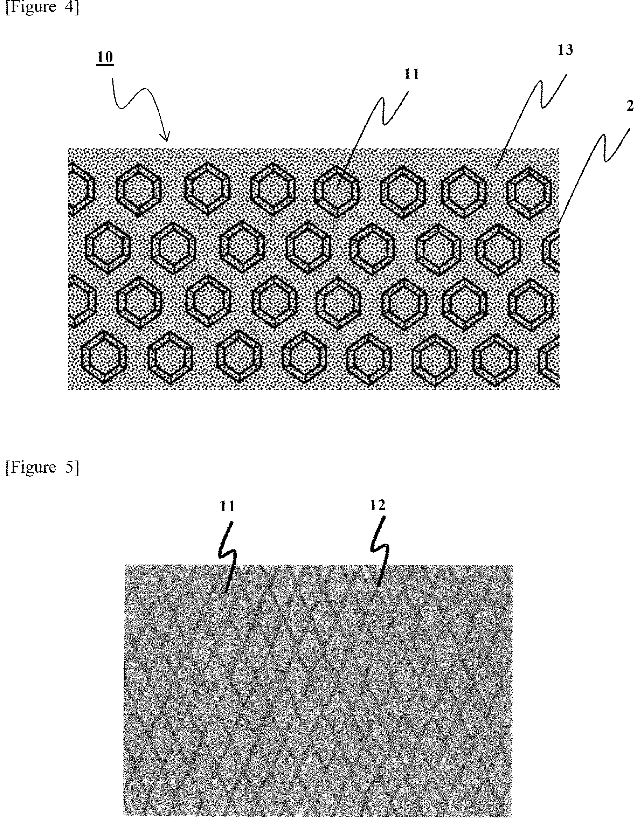

A shape of each of the island-shaped convex portions 11 is not particularly limited. Figures 1 and 2 illustrate a case in which the island-shaped convex portion 11 has a shape of a truncated quadrangular pyramid, the shape may be a cylindrical shape (Figure 3) and an elliptical cylindrical shape, may be a polygonal cylindrical shape such as a triangular prism, a quadrangular prism, a pentagonal prism, or a hexagonal prism, may be a truncated cone shape and an elliptical truncated cone shape, may be a multiple truncated pyramid such as a triangular truncated pyramid, a square truncated pyramid, a pentagonal truncated pyramid or a hexagonal truncated pyramid (Figure 4), may be a cone shape, an elliptical cone shape or a polygonal pyramid shape, or may be a combination thereof.

When the all-solid-state LiB is formed, the island-shaped convex portions 11 may be covered with the solid electrolyte, and the solid electrolyte may also penetrate the groove 12.

When a dimension of each portion of the negative electrode active material layer 2 formed on the negative electrode current collector is described with reference to Figure 1, a width (W) of the island-shaped convex portion 11 is preferably in a range of 10 µm to 100 µm, particularly 15 µm to 50 µm, and further 15 µm to 30 µm. By setting the width of the island-shaped convex portion 11 within the above range, it is possible to obtain a block in a state in which an outer shape of the island-shaped convex portion is substantially maintained even when the all-solid-state LiB is charged and discharged after formation, and stable performance can be exhibited. In addition, when the width of the island-shaped convex portion 11 is within the above range and larger than an average size of the blocks naturally formed by charge and discharge of the all-solid-state LiB, specifically, when the width is formed to be larger than about 15 µm to 25 µm, cracks may occur in the block derived from the island-shaped convex portion, but such cracks do not reach the negative electrode current collector, and an effect of forming the blocks more uniformly is not changed as compared with a case in which the negative electrode active material layer is formed on an entire surface of the negative electrode current collector.

A size of the island-shaped convex portion can also be represented by an area of the island-shaped convex portion, and is preferably in a range of 100 µm² to 10000 µm², particularly 225 µm² to 2500 µm², and further 225 µm² to 900 µm². Specification of the size of the island-shaped convex portion by the area is particularly effective when a patterned shape is complicated.

A height (H) of the island-shaped convex portion 11 is preferably in a range of 5 µm to 100 µm, particularly 10 µm to 80 µm, and further 15 µm to 50 µm in order to sufficiently exhibit performance as the negative electrode active material. The height (H) of the island-shaped convex portion 11 refers to a distance from a surface of the current collector to a highest point of the island-shaped convex portion 11. Further, an interval (P) between the island-shaped convex portions 11 is preferably in a range of 10% to 50%, particularly 15% to 30%, of the width (W) of the island-shaped convex portion 11, since an influence of expansion and contraction between the island-shaped convex portions can be reduced when the all-solid-state LiB is charged and discharged after formation. Further, a thickness (t) of the connection layer 13 needs only to be smaller than the height of the island-shaped convex portion. Preferably, the pattern is formed such that the thickness (t) is preferably in a range of 1% to 50%, particularly 10% to 30%, of the height of the island-shaped convex portion and does not exceed 15 µm, since the block is less likely to form in the connecting portions even when the all-solid-state LiB is charged and discharged after formation, and exposure of the negative electrode current collector to the bottom surface of the groove portion 12 is reliably prevented.

As illustrated in Figure 1, the width (W) of the island-shaped convex portion refers to a length measured starting from a rising portion of the island-shaped convex portion. The above length refers to a distance between facing sides in a case of a rectangle having facing sides, a diameter in a case of a circle, and an equivalent diameter in a case of a polygon having an odd number of sides. The interval (P) between the island-shaped convex portions 11 refers to a distance between rising portions of facing two island-shaped convex portions. The thickness (t) of the connection layer 13 refers to an average thickness of the negative electrode active material layer present between the rising portions.

When the length between the sides and the diameter are different depending on a measurement location, it is preferable that each measurement value is within the above range. When the island-shaped convex portion and the connection layer are connected by a gentle curve, the width of the island-shaped convex portion 11 may be measured by taking a portion exceeding 50% of the height of the island-shaped convex portion as a rising portion. An angle of the rising portion of the island-shaped convex portion is preferably about 60° to 90° since a large amount of silicon can be ensured per island-shaped convex portion.

In order to form the negative electrode active material layer made of the negative electrode forming composition for an all-solid-state LiB on the negative electrode current collector, recommended is a method in which the negative electrode forming composition for an all-solid-state LiB is made into a paste by a solvent, a pattern of the paste is formed on the negative electrode current collector, and then the solvent is dried. A coating method is not particularly limited as long as it is a method capable of forming island-shaped convex portions by patterning. Examples thereof include screen printing and a 3D printer. The drying may be performed at a temperature at which the solvent used is sufficiently volatilized.

There is also a method of forming the island-shaped convex portions 11 and the groove portions 12 in a mesh pattern shape as illustrated in Figure 5, for example, by pressing a mold material such as a mesh against the negative electrode active material layer in a dried or semi-dried state after applying the negative electrode forming composition for an all-solid-state LiB to the entire surface of the negative electrode current collector. In this case, the width of the island-shaped convex portion can be adjusted based on a mesh interval, the interval between the island-shaped convex portions can be adjusted based on a mesh thickness, and a depth of the island-shaped convex portion and the thickness of the connection layer can be adjusted based on a pressing depth.

As described above, when the LiB is assembled using the negative electrode forming material for an all-solid-state LiB including the island-shaped convex portions 11 formed by forming the negative electrode forming composition for an all-solid-state LiB in a predetermined pattern on the negative electrode current collector, and is charged and discharged, complete control is difficult, but the shape of the island-shaped convex portions 11 is substantially maintained, and the negative electrode active material layer is amorphized and densified. Therefore, the sizes and shapes of the blocks derived from the island-shaped convex portions 11 and the groove portion between the blocks are made uniform, and even when expansion and contraction due to charge and discharge are repeated, contact between adjacent blocks can be prevented. As a result, pulverization and isolation of the negative electrode active material are less likely to occur, and a decrease in capacity can be prevented. Furthermore, due to the presence of the connection layer 13, the negative electrode current collector 1 is not exposed at the bottom portion of the groove portion 12 even after charge and discharge. When the negative electrode current collector 1 is exposed at the bottom portion of the groove portion 12, the solid electrolyte penetrates the interface between the negative electrode current collector 1 and the block via the exposed portion and a gap is generated, and isolating the negative electrode active material. However, in the present invention, such isolation can be effectively prevented by providing the connection layer 13.

The negative electrode forming material for an all-solid-state LiB includes the above negative electrode active material layer 2 on the negative electrode current collector 1, and a solid electrolyte layer may be further formed on the negative electrode active material layer. The solid electrolyte is not particularly limited, and examples thereof include a sulfide-based solid electrolyte and an oxide-based solid electrolyte that are widely used. The sulfide-based solid electrolyte is advantageous in terms of high lithium ion conductivity. The oxide-based solid electrolyte is relatively chemically stable, and is advantageous from a viewpoint of high voltage resistance. When the oxide-based solid electrolyte is used as the solid electrolyte layer, a widely used ion conductive material may be used in combination as necessary to improve the lithium ion conductivity.

The sulfide-based solid electrolyte contains, for example, lithium, phosphorus, and sulfur, and may further contain elements such as O, Al, B, Si, Ge, and I. Specifically, amorphous Li₃PS₄, amorphous 40LiI·60Li₃PS₄ (mol%), a β-Li₃PS₄ crystal, α-Li₃PS₄, a Li₇P₃S₁₁ crystal, or the like is used. An argyrodite-based solid electrolyte may be used.

Such a sulfide-based solid electrolyte can be obtained by a known method. For example, the sulfide-based solid electrolyte can be prepared by a method of preparing lithium sulfide (Li₂S) and diphosphorus pentasulfide (P₂S₅) as starting materials, mixing Li₂S and P₂S₅ at a molar ratio of about 50:50 to 80:20, and melting and rapidly cooling the mixture, a method of mechanically milling the mixture, or a known method such as a suspension method, a solution method, or a sol-gel method which are so-called wet methods.

The sulfide-based solid electrolyte obtained by the above method is amorphous. The sulfide-based solid electrolyte can be used in this amorphous state, or the amorphous sulfide-based solid electrolyte may be heat-treated to obtain a crystalline sulfide-based solid electrolyte. By crystallization, improvement in the lithium ion conductivity can be expected.

Examples of the oxide-based solid electrolyte include Li_{5+X}La₃(Zr_{X}, A_{2-X})O₁₂ (in the chemical formula, A is one or more elements selected from the group consisting of Sc, Ti, C, Y, Nb, Hf, Ta, Al, Si, Ga, Ge, and Sn, and X is 1.4 ≤ X ≤ 2), Li_{1+X}Al_{X}Ti_{2-X}(PO₄)₃ (X is 0 ≤ X ≤ 1), and Li_{3X}La_{2/3-X}TiO₃ (X is 0 ≤ X ≤ 2/3). These oxide-based solid electrolytes have high ionic conductivity at room temperature and high electrochemical stability.

From the viewpoint of the electrochemical stability, the oxide-based solid electrolyte may contain insulating particles such as silica (SiO₂) particles, γ-alumina (Al₂O₃) particles, ceria (CeO₂) particles, and zirconia (ZrO₂) particles. Other known metal oxide particles may be used.

The above solid electrolyte preferably has a Young's modulus (25°C) of 10 GPa to 70 GPa, and more preferably 15 GPa to 30 GPa, since when the negative electrode active material is densified into a block shape, the solid electrolyte is easily fitted into a gap formed between the blocks, and the ion conductivity can be maintained at a higher level. Examples of the solid electrolyte having a Young's modulus (25°C) of 10 GPa to 70 GPa include amorphous Li₃PS₄, a LiX-Li₃PS₄ (X = I, Br, Cl)-based glass, β-Li₃PS₄, α-Li₃PS₄, a Li₇P₃S₁₁ crystal, an LGPS crystal-based solid electrolyte represented by Li₁₀GeP₂S₁₂, and an argyrodite-based crystal represented by Li₆PS₅X (X= I, Br, Cl).

A film thickness of the solid electrolyte layer is preferably 500 nm to 1000 µm, and more preferably 1 µm to 500 µm. When the film thickness is 500 nm or more, a solid-state battery having stable performance can be prepared without chipping or cracking. When the film thickness is 1000 µm or less, a solid-state battery having sufficiently low resistance can be prepared.

When a battery is assembled using the above negative electrode forming material for an all-solid-state LiB and is charged and discharged, as described above, a part or all of the silicon crystal particles as the negative electrode active material are amorphized, and densified in a block shape in a state in which the pattern of the island-shaped convex portions is substantially maintained, and the above unique effect of the present invention is exhibited.

In general, when silicon is used as the negative electrode active material, a theoretical maximum value of a charge amount of the all-solid-state LiB is about 3600 mAhg⁻¹, and a practical use range of charge and discharge is about 1000 mAhg⁻¹ to 3000 mAhg⁻¹. That is, it is estimated that the all-solid-state LiB according to the present invention stably exhibits battery performance with a good cycle characteristic for a long period of time since the blocks generated by charge and discharge are uniformly controlled by the island-shaped convex portions 11, a groove portion reaching the negative electrode current collector 1 is less likely to form by the presence of the connection layer 13, and the volume change of the generated blocks is small.

In a half cell assembled in Examples to be described later, the above range corresponds to a state of a potential of +0.02 V to +1.0 V with respect to a counter electrode such as a metal lithium electrode.

When silicon is used as the negative electrode active material layer without forming a pattern, since a decrease in charge and discharge capacity occurs along with an increase in current density, the current density used during charge and discharge of the all-solid-state LiB is in a range of 0.1 mA/cm⁻² to 0.4 mA/cm⁻² in practical use. In contrast, in the present invention, even when the current density is increased to 0.6 mA/cm⁻² or more, no remarkable capacity decrease is shown, and a good cycle characteristic is maintained. That is, it is considered that a reason why the all-solid-state LiB according to the present invention stably exhibits the battery performance with a good cycle characteristic for an extremely long period of time is that the volume change of the blocks based on the island-shaped convex portions is small in use, the interface with the solid electrolyte is stable, and the connection layer 13 is present even after charge and discharge, thereby preventing the solid electrolyte from penetrating between the negative electrode current collector 1 and the block.

Furthermore, since the island-shaped convex portions are formed in a pattern, the blocks after charge and discharge are also formed in such a pattern, and thus there is also an advantage that a variation in performance among all-solid-state LiB products is extremely small.

### (All-solid-state Lithium Ion Secondary Battery)

As illustrated in Figure 6, an all-solid-state lithium ion secondary battery according to the present invention includes a positive electrode current collector 5, a positive electrode active material layer 4, the negative electrode active material layer 2, the negative electrode current collector 1, and a solid electrolyte layer 3, and a negative electrode is formed using the negative electrode forming material for an all-solid-state LiB. When a LiB is assembled using the negative electrode forming material for an all-solid-state LiB and is charged and discharged, a part or all of silicon crystals contained in the negative electrode forming material for an all-solid-state LiB are amorphized. As a result of charge and discharge, a part or all of silicon forms an alloy with lithium. That is, after the LiB is assembled and is charged and discharged, a crystal structure of the negative electrode active material layer is partially or entirely composed of amorphous silicon, unlike the silicon crystal before the assembly. In the present description, the negative electrode active material after charge and discharge may be simply described as "amorphous silicon", but the amorphous silicon may contain a silicon crystal or may be alloyed with lithium.

This is because when the battery is charged, silicon particles in the negative electrode layer absorb lithium and expand in volume, and at this time, the silicon particles are fused and amorphized. Minute voids present between the silicon particles are pushed out, and a dense block (a groove that does not reach the negative electrode current collector is generated inside depending on the size of the island-shaped convex portion) is formed in an island-shaped convex portion unit isolated by the groove portion, whereby an increase in thickness of the negative electrode layer itself is reduced to about 1.5 times even when an expansion coefficient of the silicon particles themselves due to the charge is about 300%.

During discharge, silicon tends to return to an original volume by lithium release, the solid electrolyte relatively softer than the silicon block is drawn into the voids around the above blocks, and there is almost no reduction in thickness of the negative electrode layer itself.

The solid electrolyte layer 3 is made of the above solid electrolyte.

In the all-solid-state LiB according to the present invention, a configuration other than the negative electrode can be a configuration same as that of a known all-solid-state LiB, and is not particularly limited. A positive electrode includes the positive electrode active material layer 4 and the positive electrode current collector 5, and a known positive electrode active material and current collector are sufficiently used.

### Examples

Hereinafter, the present invention will be described in detail with reference to Examples, and is not limited to these Examples.

### (Average Particle Diameter of Silicon)

An average particle diameter, a standard deviation, and the like of silicon were determined based on a laser diffraction/scattered light intensity using LA-950S2 (manufactured by HORIBA, Ltd.).

### (Specific Surface Area of Silicon)

A specific surface area of silicon particles was determined by gas adsorption measurement by a constant volume method using BELSORP-miniX (manufactured by MicrotracBEL Corp.).

### (Active Material Filling Ratio of Negative Electrode Layer before Charge and Discharge Test)

(1) A film thickness of a silicon coating film was calculated based on an SEM image, and a coating film volume V0 per unit area was calculated.
(2) A volume V1 of a silicon crystal itself was calculated by dividing a weight of silicon per unit area in the coating film obtained based on a weight of the entire negative electrode layer by a density of the silicon crystal.
(3) An active material filling ratio of the coating film was calculated as V1/V0 × 100 (%).

### (Charge and Discharge Cycle Test)

In a charge and discharge test, a constant current density test was performed using BTS-2004H (manufactured by Nagano) at a current density of 0.1 mAcm⁻². A measurement temperature was set to 25°C, only an initial charge amount was set to 3000 mAhg⁻¹, and an initial discharge amount was set to 2000 mAhg⁻¹. From the second charge and discharge and thereafter, the test was performed by setting a state after the initial discharge to 0 mAhg⁻¹, setting the subsequent charge amount to 2000 mAhg⁻¹, and setting the discharge amount to 2000 mAhg⁻¹. The charge and discharge of 2000 mAhg⁻¹ was repeated.

Evaluation results of the charge and discharge cycle test were shown as the number of cycles in which a discharge capacity could be achieved at a retention rate of 90% or more with respect to a set capacity of 2000 mAhg⁻¹ in the cycle test.

However, a case in which the test was completed when an initial charge capacity did not reach 3000 mAhg⁻¹ was recorded as "NG".

### (Battery Material)

A half cell was assembled using the following materials, and a structure and a characteristic of a negative electrode were evaluated.
Counter electrode
   Lithium (Li) foil: film thickness of 0.1 mm (manufactured by Honjo Metal Co., Ltd.)
   Indium (In) foil: film thickness 0.127 mm (manufactured by Aldrich)
Negative electrode
   Negative electrode current collector: CF-T7F-35 (manufactured by Fukuda Metal Foil & Powder Co., Ltd.)

Negative electrode active material layer: a mixture containing 90 parts of silicon crystal particles and 10 parts of a thermosetting polyimide resin was used. As the thermosetting polyimide resin, DreamBond (trade name) manufactured by I.S.T. Industrial Summit Technology was used.

### Solid electrolyte: a-40LiI·60Li₃PS₃ (prepared by mechanical milling method)

As the silicon crystal particles, polycrystalline silicon manufactured by Tokuyama Corporation was used as a raw material and crushed using a planetary mill to prepare the following particles.

**[Table 1]**

| No. | Average particle diameter (µm) | Standard deviation/average particle diameter | Specific surface area (m²/g) |
|---|---|---|---|
| T-01 | 0.4 | 0.78 | 130 |
| T-02 | 0.8 | 0.68 | 18 |
| T-03 | 1.0 | 0.58 | 13 |
| T-04 | 1.6 | 0.56 | 12 |
| T-05 | 2.2 | 0.50 | 7 |
| T-06 | 3.9 | 0.35 | 4 |
| T-07 | 8.5 | 0.30 | 2 |

### (Evaluation of Outer Shape of Silicon Block after Discharge)

Regarding evaluation of a silicon block present in the negative electrode active material layer after discharge, in the evaluation of the cycle characteristic, a plurality of similar half cells were prepared, and cells after discharge in which the first and 200th charge and discharge cycle tests were completed were each cut in a direction perpendicular to a negative electrode surface including a negative electrode current collector. At this time, cutting was performed twice in a manner of being perpendicular to any point on the negative electrode surface. A cross section after each cutting was subjected to an ion milling treatment (CP treatment) using a cross section polisher device, and then captured using a scanning microscope (SEM), and elemental analysis was performed by energy dispersive X-ray spectroscopy (EDS).

For a silicon layer present in the SEM image, a width and a height (H) of a block were measured at 10 or more points, and an average length of each of the width and the height was obtained.

Denseness of a silicon element present in the silicon block was determined by image analysis. The inside of the silicon block in the SEM-EDS image was analyzed using image analysis software "A-zo-kun" (trade name, manufactured by Asahi Kasei Engineering Corporation). The image was divided into 256 gradations in density, a density of 160 gradations was determined as a binarization threshold, and a portion darker than the threshold was determined to be silicon. A case in which an area ratio of the silicon element in the silicon block was less than 90% or the area ratio of the particles less than 5 µm in the particle size distribution of silicon was 20% or more was determined as "isolation".

### (Examples 1 to 7) Comparative Examples

### (Production of Negative Electrode)

The above polycrystalline silicon particles (360 mg) and a polyimide solution (27.2 wt% NMP solution) in an amount to give a solid content of 40 mg were mixed, and NMP (N-methylpyrrolidone) was further added thereto to obtain a negative electrode forming composition for an all-solid-state LiB. The composition was stirred for 2 hours (rotation: 1056 rpm, revolution: 1600 rpm) and defoamed for 6 minutes (rotation: 290 rpm, revolution: 1360 rpm).

The entire surface of the negative electrode current collector was flat-coated with the obtained coating liquid using a doctor blade (feed rate: 1.9 mm/sec, blade gap: 12.5 µm). After drying at room temperature for half a day or longer, the polyimide was cured by heating with a heater (250°C, 30 minutes) under vacuum to obtain a negative electrode forming material. A thickness of an active material layer was in a range of 14 µm to 21 µm.

### (Production of Half Cell)

A sheet of the negative electrode forming material, which was punched to have a diameter of 9 mm, was placed in an insulating die, 65 mg of solid electrolyte particles were loaded onto above the negative electrode sheet, and uniaxial pressing was performed at a molding pressure of 560 MPa. A thickness of a solid electrolyte layer after pressing was 300 µm to 400 µm. After an upper punch was once removed, a counter electrode in which metal foils of In and Li punched to have a diameter of 6 mm were stacked in the order of In/Li/In was placed on an upper side of the solid electrolyte layer, and uniaxial pressing was performed again at a pressure of about 50 MPa to prepare an all-solid-state half cell. In order to eliminate an influence of oxygen, nitrogen, moisture, and the like, all steps of assembly of the above half cell were performed under an argon atmosphere in a glove box shielded from outside air. The obtained half cell was subjected to the above battery evaluation. The results of the first charge and discharge cycle test are shown in Table 2, and the results after the charge and discharge cycle test are shown in Table 3.

Figure 7 shows an SEM image of a cross section of the negative electrode active material layer after charge and discharge when the flat-coated negative electrode layer is formed. As illustrated in Figure 7, in the negative electrode active material layer after charge and discharge, irregular grooves are formed between the blocks, and the respective dimensions are shown in the table. It can be seen from the average value and the maximum value that the negative electrode active material layer is divided into blocks having irregular shapes. It is found that the grooves reach the current collector.

**[Table 2]**

| Example | Silicon particle used | Average particle diameter of silicon | Active material filling ratio in negative electrode layer | Evaluation of silicon negative electrode layer after charge and discharge cycle for one time | | |
|---|---|---|---|---|---|---|
| | | (µm) | (%) | Presence or absence of block formation | Width of block average/maximum (µm) | Height of block average/maximum (µm) |
| 1 | T-01 | 0.4 | 80 | Silicon is isolated, no block is formed | | |
| 2 | T-02 | 0.8 | 50 | Yes | 20/50 | 20/35 |
| 3 | T-03 | 1.0 | 40 | Yes | 18/50 | 22/32 |
| 4 | T-04 | 1.6 | 42 | Yes | 20/48 | 23/30 |
| 5 | T-05 | 2.2 | 38 | Yes | 18/45 | 18/30 |
| 6 | T-06 | 3.9 | 36 | Yes | 15/45 | 20/33 |
| 7 | T-07 | 8.5 | 30 | Silicon is fused, but cracks are observed | | |

| | | | | | | |
|---|---|---|---|---|---|---|
| 1) Since the grooves were formed to reach the current collector, the interval on the current collector was measured. | | | | | | |

**[Table 3]**

| Example | Silicon particle used | Average particle diameter of silicon | State evaluation of silicon negative electrode layer after charge and discharge cycle test | | Result of charge and discharge cycle test |
|---|---|---|---|---|---|
| | | (µm) | Block pattern in negative electrode layer | Number of grooves reaching current collector (number/100 µm) | |
| 1 | T-01 | 0.4 | - | - | NG |
| 2 | T-02 | 0.8 | Silicon negative electrode layer is peeled off from current collector | 4 | 100 |
| 3 | T-03 | 1.0 | Silicon negative electrode layer is peeled off from current collector | 3 | 180 |
| 4 | T-04 | 1.6 | Silicon negative electrode layer is peeled off from current collector | 4 | 170 |
| 5 | T-05 | 2.2 | Silicon negative electrode layer is peeled off from current collector | 3 | 130 |
| 6 | T-06 | 3.9 | Silicon negative electrode layer is peeled off from current collector | 3 | 110 |
| 7 | T-07 | 8.5 | Silicon is isolated inside block | - | 50 |

### (Examples 8 to 14) Examples

After the negative electrode active material layer was dried at room temperature in Examples 1 to 7, the active material layer was heated to 80°C, and a Ni mesh having a square pattern was pressed against the active material layer for 30 minutes to obtain a negative electrode forming material including quadrangular prism-shaped island-shaped convex portions. The mesh pattern had a square shape having a side of 55 µm. A pattern of about 55 µm in width and about 25 µm in height of the island-shaped convex portion, about 25 µm in interval between the island-shaped convex portions, and about 5 µm in thickness of the connection layer was transferred to the active material layer.

An evaluation half cell was obtained in the same manner as in Examples 1 to 7 using the above negative electrode forming material. The obtained battery was subjected to various evaluations. The results are shown in Table 4.

In Examples 9 to 13, in a silicon negative electrode layer after the charge and discharge cycle test (200 cycles), each block corresponding to the island-shaped convex portion and the connection layer were subdivided into smaller blocks due to shallow cracks not reaching the current collector.

**[Table 4]**

| Example | Silicon particle used | Average particle diameter of silicon | Active material filling ratio in negative electrode layer | State evaluation of silicon negative electrode layer after charge and discharge cycle test (200 cycles) | | Result of charge and discharge cycle test |
|---|---|---|---|---|---|---|
| | | (µm) | (%) | Width of block average/maximum (µm) | Height of block average/maximum (µm) | |
| 8 | T-01 | 0.4 | 75 | Silicon is isolated, no block is formed | | NG |
| 9 | T-02 | 0.8 | 52 | 25/35 | 35/38 | 200 < |
| 10 | T-03 | 1.0 | 43 | 28/35 | 33/38 | 200 < |
| 11 | T-04 | 1.6 | 41 | 25/28 | 36/40 | 200 < |
| 12 | T-05 | 2.2 | 38 | 35/40 | 35/38 | 200 < |
| 13 | T-06 | 3.9 | 35 | 25/35 | 35/40 | 200 < |
| 14 | T-07 | 8.5 | 30 | Silicon is fused, but cracks are observed | | 55 |

| | | | | | | |
|---|---|---|---|---|---|---|
| * Examples 8 and 14 are Comparative Examples. | | | | | | |

### (Examples 15 to 21) Examples

After the negative electrode active material layer was dried at room temperature in Examples 1 to 7, a Ni mesh having a square pattern was pressed against the active material layer for 30 minutes, followed by drying at 80°C, to obtain a negative electrode forming material including quadrangular prism-shaped island-shaped convex portions. The mesh pattern had a square shape having a side of 30 µm. A pattern of about 30 µm in width and about 30 µm in height of the island-shaped convex portion, about 20 µm in interval between the island-shaped convex portions, and about 8 µm in thickness of the connection layer was transferred to the active material layer.

An evaluation half cell was obtained in the same manner as in Examples 1 to 7 using the above negative electrode forming material. The obtained battery was subjected to various evaluations. The results are shown in Table 5.

In Examples 16 to 20, in each block of a silicon negative electrode layer after the charge and discharge cycle test (200 cycles), each block corresponding to the island-shaped convex portion and the connection layer were subdivided into smaller blocks due to shallow cracks not reaching the current collector.

**[Table 5]**

| Example | Silicon particle used | Average particle diameter of silicon | Active material filling ratio in negative electrode layer | State evaluation of silicon negative electrode layer after charge and discharge cycle test (200 cycles) | | Result of charge and discharge cycle test |
|---|---|---|---|---|---|---|
| | | (µm) | (%) | Width of block average/maximum (µm) | Height of block average/maximum (µm) | |
| 15 | T-01 | 0.4 | 72 | Silicon is isolated, no block is formed | | NG⁾ |
| 16 | T-02 | 0.8 | 55 | 33/38 | 35/40 | 200 < |
| 17 | T-03 | 1.0 | 48 | 36/39 | 33/40 | 200 < |
| 18 | T-04 | 1.6 | 45 | 35/38 | 32/38 | 200 < |
| 19 | T-05 | 2.2 | 40 | 35/38 | 36/40 | 200 < |
| 20 | T-06 | 3.9 | 42 | 38/40 | 35/40 | 200 < |
| 21 | T-07 | 8.5 | 30 | Silicon is fused, but deep cracks cause block shape to collapse and to be isolated | | 62 |

| | | | | | | |
|---|---|---|---|---|---|---|
| * Examples 15 and 21 are Comparative Examples. | | | | | | |

### (Examples 22 to 28) Examples

After the negative electrode active material layer was dried at room temperature in Examples 1 to 7, the active material layer was heated to 80°C, and a Ni mesh having a regular hexagonal pattern was pressed against the active material layer for 30 minutes to obtain a negative electrode forming material including hexagonal prism-shaped island-shaped convex portions. A mesh pattern had a regular hexagonal shape having a side of about 20 µm. To the active material layer, a pattern was transferred in which the island-shaped convex portions had a hexagonal prism shape having a distance between facing sides of about 35 µm and had a height of about 30 µm, the interval between the island-shaped convex portions was about 20 µm, and the thickness of the connection layer was about 8 µm.

An evaluation half cell was obtained in the same manner as in Examples 1 to 7 using the above negative electrode forming material. The obtained battery was subjected to the above various evaluations. The results are shown in Table 6.

In Examples 23 to 27, in each block of a silicon negative electrode layer after the charge and discharge cycle test (200 cycles), each block corresponding to the island-shaped convex portion and the connection layer were subdivided into smaller blocks due to shallow cracks not reaching the current collector.

**[Table 6]**

| Example | Silicon particle used | Average particle diameter of silicon | Active material filling ratio in negative electrode layer | State evaluation of silicon negative electrode layer after charge and discharge cycle test (200 cycles) | | Result of charge and discharge cycle test |
|---|---|---|---|---|---|---|
| | | (µm) | (%) | Width of block average/maximum (µm) | Height of block average/maximum (µm) | |
| 22 | T-01 | 0.4 | 78 | Silicon is isolated, no block is formed | | NG |
| 23 | T-02 | 0.8 | 50 | 40/45 | 35/40 | 200 < |
| 24 | T-03 | 1 | 48 | 38/45 | 35/38 | 200 < |
| 25 | T-04 | 1.6 | 43 | 40/48 | 36/40 | 200 < |
| 26 | T-05 | 2.2 | 38 | 40/45 | 35/39 | 200 < |
| 27 | T-06 | 3.9 | 38 | 38/43 | 33/40 | 200 < |
| 28 | T-07 | 8.5 | 31 | Silicon is fused, but deep cracks cause block shape to collapse and to be isolated | | 49 |

| | | | | | | |
|---|---|---|---|---|---|---|
| * Examples 22 and 28 are Comparative Examples. | | | | | | |

### (Examples 29 to 33) Examples

The results of a charge and discharge test performed on the same cells in Examples 16 to 20 using the negative electrode layer patterned in advance at a current density of 1.0 mAcm⁻² during the charge and discharge test are shown in Table 8.

In Examples 29 to 33, in each block of a silicon negative electrode layer after the charge and discharge cycle test (200 cycles), each block corresponding to the island-shaped convex portion and the connection layer were subdivided into smaller blocks due to shallow cracks not reaching the current collector.

**[Table 7]**

| Example | Silicon particle used | Average particle diameter of silicon | Active material filling ratio in negative electrode layer | State evaluation of silicon negative electrode layer after charge and discharge cycle test (200 cycles) | | Result of charge and discharge cycle test |
|---|---|---|---|---|---|---|
| | | (µm) | (%) | Width of block average/maximum (µm) | Height of block average/maximum (µm) | |
| 29 | T-02 | 0.8 | 55 | 33/38 | 35/40 | 200 < |
| 30 | T-03 | 1.0 | 48 | 36/39 | 33/40 | 200 < |
| 31 | T-04 | 1.6 | 45 | 35/38 | 32/40 | 200 < |
| 32 | T-05 | 2.2 | 40 | 35/40 | 36/39 | 200 < |
| 33 | T-06 | 3.9 | 42 | 38/42 | 35/40 | 200 < |

### Reference Signs List

- 1: negative electrode current collector
- 2: negative electrode active material layer
- 3: solid electrolyte layer
- 4: positive electrode active material layer
- 5: positive electrode current collector
- 10: negative electrode forming material for all-solid-state lithium ion secondary battery
- 11: negative electrode active material layer (island-shaped convex portion)
- 12: groove portion
- 13: connection layer
- 20: all-solid-state lithium ion secondary battery

## Claims

1. A negative electrode forming material for an all-solid-state lithium ion secondary battery, the material comprising:
on a negative electrode current collector, a negative electrode active material layer, which is made of a negative electrode forming composition for an all-solid-state lithium ion secondary battery containing a silicon crystal having an average particle diameter of 0.5 µm to 5.0 µm, which includes island-shaped convex portions formed in a pattern shape at an interval, and in which a connection layer made of the negative electrode forming composition for an all-solid-state lithium ion secondary battery is formed continuously with the island-shaped convex portions on a bottom surface of a groove portion formed between the island-shaped convex portions.

2. The negative electrode forming material for an all-solid-state lithium ion secondary battery according to claim 1, wherein
the negative electrode active material layer is formed on the negative electrode current collector in a pattern such that a width of each of the island-shaped convex portions is in a range of 10 µm to 100 µm, a height thereof is in a range of 5 µm to 100 µm, the interval between the island-shaped convex portions is in a range of 10% to 50% of the width of the island-shaped convex portion, and a thickness of the connection layer is in a range of 1% to 50% of the height of the island-shaped convex portion and does not exceed 15 µm.

3. The negative electrode forming material for an all-solid-state lithium ion secondary battery according to claim 1, wherein
the negative electrode active material layer is formed on the negative electrode current collector in a pattern such that a shape of each of the island-shaped convex portions is a cylindrical shape, an elliptical cylindrical shape, a polygonal cylindrical shape, a truncated cone shape, an elliptical truncated cone shape, a polygonal truncated cone shape, a cone shape, an elliptical cone shape, or a polygonal pyramid shape.

4. The negative electrode forming material for an all-solid-state lithium ion secondary battery according to claim 1, wherein
a silicon crystal filling ratio of the negative electrode forming composition for an all-solid-state lithium ion secondary battery is 35 vol% to 55 vol%.

5. The negative electrode forming material for an all-solid-state lithium ion secondary battery according to claim 1, wherein
the negative electrode active material layer contains 5 parts by mass or less of an electron conductivity imparting agent with respect to 100 parts by mass of the silicon crystal.

6. An all-solid-state lithium ion secondary battery comprising:
a positive electrode;
a negative electrode; and
a solid electrolyte layer, wherein
the negative electrode is composed of the negative electrode forming material for an all-solid-state lithium ion secondary battery according to any one of claims 1 to 5.

7. The all-solid-state lithium ion secondary battery according to claim 6, wherein the solid electrolyte layer is also present in the groove portion.
